Europäisches Patentamt

European Patent Office

Office européen des brevets

(19)

(11) Veröffentlichungsnummer: **0 202 607**
**B1**

(12) **EUROPÄISCHE PATENTSCHRIFT**

(45) Veröffentlichungstag der Patentschrift: **24.10.90**

(51) Int. Cl.⁵: **H 04 N 7/00**, H 05 G 1/64

(21) Anmeldenummer: **86106625.6**

(22) Anmeldetag: **15.05.86**

(54) **Schaltungsanordnung zur fernsehtechnischen Aufnahme und Wiedergabe statischer oder bewegter Objekte.**

(30) Priorität: **17.05.85 DE 3517737**

(43) Veröffentlichungstag der Anmeldung:
**26.11.86 Patentblatt 86/48**

(45) Bekanntmachung des Hinweises auf die
Patenterteilung:
**24.10.90 Patentblatt 90/43**

(84) Benannte Vertragsstaaten:
**FR GB NL**

(56) Entgegenhaltungen:
**CH-A- 580 897**
**DD-A- 127 856**
**DE-A-2 703 836**
**DE-A-3 015 184**
**DE-B-1 241 869**
**DE-B-2 506 915**
**US-A-3 090 829**

(73) Patentinhaber: **Forschungszentrum Jülich GmbH**
**Postfach 1913**
**D-5170 Jülich (DE)**

(72) Erfinder: **Haubold, Heinz-Günter, Dr.**
**Fliederweg 6**
**D-5170 Jülich (DE)**
Erfinder: **Hiller, Peter**
**Ardennenstrasse 76**
**D-5160 Düren (DE)**

EP 0 202 607 B1

## Beschreibung

Die Erfindung bezieht sich auf eine Schaltungsanordnung für eine Kamera zur fernsehtechnischen Aufnahme und Wiedergabe statischer oder bewegter Objekte mit standardisiertem Abtastzyklus und einem Target mit integrierender Wirkung und mit einem Steuerelement, das für die Targetgebiete einzeln in Abhängigkeit von einem Schwellenwert ein automatisch gesteuertes Aussetzen des Auslesens der elektrischen Ladungen ermöglicht, sowie mit einem Schwellenwertdetektor, der dazu vorgesehen ist, die Ladungsmenge der vom Target ausgelesenen Ladungen nach Maßgabe eines vorgegebenen Schwellenwertes zu überprüfen.

Die Wiedergabe der Helligkeit eines Objektes ist durch den Dynamikbereich des Targets der Aufnahmekamera beschränkt. Bei kontrastreichen Objekten liegen in der Regel die hellen Bildpunkte des Objektes im Dynamikbereich, während es Objektpunkte geringerer Helligkeit (bzw. Strahlen geringerer Intensität) gibt, die unterhalb des Dynamikbereiches zu liegen kommen.

Diese Objektpunkte geringer Helligkeit werden im wiedergegebenen Bild des Objektes als Bildpunkte einheitlicher Helligkeit wiedergegeben. Das hat zur Folge, daß derartige Objektpunkte geringer Helligkeit auch bei unterschiedlicher Helligkeit dieser Objektpunkte im wiedergegebenen Bild nicht unterschieden werden können. Die Struktur "dunkler Bereiche" des Objektes kann somit im wiedergegebenen Bild nicht erkannt werden. Die aufnahmetechnisch bedingte Beschränkung der Wiedergabe des Objektes ist vielfach als mangelnde Wiedergabe des Objektes unerwünscht. Insbesondere dann, wenn es auf eine möglichst vollständige Wiedergabe des Objektes ankommt, ist sie von Nachteil. So stellt beispielsweise ein aus den vorgenannten Gründen eingeschränktes Röntgenbild eine mangelhafte Information dar. Im klinischen Bereich kann dies dazu führen, daß zu Lasten des Patienten eine weitere Röntgenaufnahme mit erhöhter Dosis gemacht werden muß, um zu der noch fehlenden Information zu gelangen.

Die Aufgabe, den dynamischen Bereich einer Bildkodierungsvorrichtung zu erweitern, wird durch eine aus der DE-AS 21 52 029 bekannte Kameravorrichtung, die digital steuerbar ist, gelöst. Nach einer ersten regulären Abtastung der Helligkeitsverteilung unter Einsatz eines Computers wird hier eine Abtastprogramm erstellt und sodann programmgesteuert in das standardisierte Abtastsystem der Kamera derart eingegriffen, daß eine unregelmäßige, in Abhängigkeit von der Helligkeit individueller Lichtpunkte erzeugte Auslesung erfolgt. Bei dieser Vorgehensweise wird von dem Prinzip Gebrauch gemacht, Ladungen an Punkten niedriger Helligkeit zu integrieren und erst nach einer bestimmten Integrationszeit auszulesen.

Zwar ist der DE-B-21 52 029 auch zu entnehmen, daß der Elektronenstrahl ausgetastet oder abgeschaltet werden kann, wenn der Auslesevorgang unterbrochen werden soll. Die Signale niedriger Intensität werden dabei auf einer Speichereinrichtung gespeichert. Hierbei wird jedoch von der grundsätzlichen Vorgehensweise, individuelle Bildpunkte ach ihrer Helligkeit selektiv auszugeben, nicht abgewichen. Somit werden die Punkte mit der höchsten Intensität mit der höchsten Wiederholungsfrequenz ausgelesen, während die schwächeren Punkte aufintegriert und weniger häufig ausgelesen werden. Hieraus ergibt sich eine relativ stark unregelmäßige Auslesung der Bildpunkte mit daraus resultierendem hohen Computeraufwand.

Wanrend somit bei dem aus der DE-B-21 52 029 bekannten Verfahren eine computergesteuerte Abtastung der Helligkeitsverteilung der Lichtpunkte vorgenommen und hiervon ausgehend das Abtastsystem der Kamera programmgesteuert wird, wird bei dem aus "Advances in Electronics and Electron Physics", Volume 28, 1969, S. 807-825: "The Application of SEC Camera Tubes and Electrostatic Image Intensifiers to Astronomy" (Green, Hansen) bekannten Verfahren auf ein lokales Eingreifen in den Auslesevorgang ganz verzichtet, da hierbei der Abtast- bzw. Auslesevorgang insgesamt ausgesetzt wird. Diese bekannte Verfahrensweise besteht praktisch darin, daß die verwendete Kamera (mit standardisiertem Abtastzyklus) partiell, nämlich hinsichtlich des Auslesevorgangs, ausgeschaltet wird. Alle Lichtpunkte des praktisch statischen Objekts, des Sternenhimmels, werden ohne Ausnahme über eine bestimmte Zeitdauer aufgenommen und erst danach die Bildpunkte des Targets ausgelesen, wobei sich allerdings der Nachteil einstellt, daß es bei helleren Lichtpunkten des Objekts (hellere Sterne) zur Übersättigung des Targets kommt. Um diesen Nachteil auszugleichen, müssen voneinander getrennte Aufnahmen gemacht werden, d.h. die Aufnahmezeit wird einmal auf schwache Lichtpunkte (schwache Sterne), ein anderes Mal auf hellere Lichtpunkte (hellere Sterne) eingestellt. Von einer Ausweitung des Dynamikbereichs der Kamera kann hierbei keine Rede sein.

Es ist Aufgabe der Erfindung, ausgehend von der DEH-B-2 152 029 eine Schaltungsanordnung zu schaffen, die es mit einfacheren Mitteln ermöglicht, auch normalerweise unterhalb des Dynamikbereiches der Kamera liegenden Helligkeiten bzw. Strahlenintensitäten wiederzugeben.

Diese Aufgabe wird bei einer Schaltungsanordnung der eingangs bezeichneten Art gelöst durch

einen dem Target direkt nachgeschalteten Teiler,

einen dem Schwellenwertdetektor vorgeschalteten, dem Teiler nachgeschalteten Schalter,

wobei der Schwellenwertdetektor bei einer Ladungsmenge, die kleiner ist als der Schwellenwert und für die der Auslesevorgang ausgesetzt werden soll, bewirkt, daß an den Gebietsspeicher und den Zähler über logische Verknüpfungseinheiten ein Signal gegeben wird,

wobei der Schalter für den Fall, daß kein Aussetzen des Auslesens der elektrischen Ladung erfolgt, in "Normalstellung" das vom Target ausgelesene Signal an den Schwellenwertdetektor durchläßt und für den Fall, daß der Auslesevorgang ausgesetzt wird, den Teiler in "Aussetzstellung" mit dem Schwellenwertdetektor verbindet,

wobei der Gebietsspeicher durch das vom Schwellenwertdetektor ausgelöste Signal gesetzt wird und dazu dient, die den Ladungen mit einer Ladungsmenge unterhalb des Schwellenwertes zugeordneten Dunkelgebiete des Targets zu speichern, und

wobei der Gebietsspeicher bei nochmaliger Abtastung der Dunkelgebiete an das den Aussetzvorgang ermöglichende Bauelement ein Signal abgibt und über eine logische Verknüpfungseinheit den Schalter auf "Aussetzstellung" setzt,

wobei der Zähler durch das vom Schwellenwertdetektor, ausgelöste Signal hochgezählt wird und dazu dient, die dem erstmaligen Speichern eines Gebietes im Gebietsspeicher folgenden Standardzyklen zu zählen,

wobei die Abfrageeinheit bewirkt, daß bei einem vorgegebenen, der Aussetzzeit entsprechenden Zählerinhalt der Gebietsspeicher zurückgesetzt und damit der Aussetzvorgang beendet, der zur Markierung des entsprechenden Dunkelgebietes im Gebietsspeicher gespeicherte Wert gelöscht, der entsprechende Inhalt des Zählers im folgenden Standardzyklus auf Null zurückgestellt und der Schalter über die Verknüpfungseinheit verzögert in "Aussetzstellung" gesetzt werden,

so daß die während derr Aussetzzeit im Target auintegrierte Ladungsmenge über den Teiler, den Schalter und den Schwellenwertdetektor als auf den Standardzyklus normiertes Signal an das Wiedergabegerät oder den Zwischenspeicher ausgegeben wird.

Beim Betrieb der Kamera ist es zweckmäßig, daß die Schwelle so vorgegeben wird, daß sie einem Wert im unteren Teil des Dynamikbereiches des Targets der Aufnahmekamera oder einem Wert unterhalb des Dynamikbereiches entspricht. Die Zahl der Standardzyklen, für die der Auslesevorgang ausgesetzt wird, sollte unter Berücksichtigung der Schnelligkeit der Bewegung des Objektes vorgegeben werden. Dabei wird bei schneller Bewegung des Objektes eine geringere Zahl der Standardzyklen, für die der Auslesevorgang ausgesetzt wird, bei langsamer Bewegung des Objektes oder bei statischen Objekten eine größere Zahl der Standardzyklen gewählt werden können.

Um jedoch zu verhindern, daß die während der Aussetzzeit aufintegrierte Ladungsmenge den Dynamikbereich des Targets überschreitet, sollte die für die Aussetzzeit maßgebende Zahl der Standardzyklen maximal so hoch sein, daß die größtmögliche, während der Aussetzzeit aufintegrierte Ladungsmenge noch in den Dynamikbereich des Targets der Aufnahmekamera fällt.

Eine Ausführungsvariante der Schaltungsanordnung gemäß der Erfindung ist gekennzeichnet einen zwischen Teiler und Schalter geschalteten, zweidemensionalen, dem Target zugeordneten digitalen Bildwiederholspeicher für die Aussetzzeiten,

einen dem Bildwiederholspeicher vorgeschalteten Analog-Digital-Wandler,

und einem dem Bildwiederholspeicher nachgeschalteten Digital-Analog-Wandler,

wobei das vom Schwellenwertdetektor ausgelöste Signal bewirkt, daß für den Aussetzvorgang der dem entsprechenden Dunkelgebiet entsprechende aktuelle Inhalt des Bildwiederholspeichers über den Digital-Analog-Wandler als normiertes Signal an das Wiedergabegerät oder einen Zwischenspeicher ausgegeben wird,

und wobei nach Beendigung jedes Aussetzvorganges die inzwischen aufintegrierte und über den Teiler ausgelesene elektrische Ladung im Analog-Digital-Wandler umgewandelt und im Bildwiederholspeicher in digitaler Form gespeichert wird.

Bei dieser Ausführungsform der Schaltungsanordnung wird ein der ausgelesenen, über die vorgegebene Zahl der Standardzyklen aufintegrierten Ladungsmenge entsprechender Wert in dem Bildwiederholspeicher gespeichert. Dabei wird für den Fall, daß unmittelbar auf eine Aussetzzeit eine weitere Aussetzzeit folgt, während der weiteren Aussetzzeit ein dem vorher im Bildwiederholspeicher gespeicherter Wert entsprechendes Signal ausgegeben und für den Fall, daß nicht unmittelbar auf eine Aussetzzeit eine weitere Aussetzzeit folgt, der für die Ladungsmenge im Bildwiederholspeicher gespeicherte Wert durch den gerade aktuellen Wert ersetzt.

Bei nicht zu schnell wechselnden Helligkeiten, bzw. bei geeigneter Wahl der Zahl der Aussetzzyklen wird so die Wiedergabe der Helligkeit der dunklen Bereiche verbessert.

Bei der zuletzt genannten Ausführungsform der Schaltungsanordnung ist zweckmäßigerweise zwischen dem Teiler und dem Digital-Analog-Wandler ein zweiter Schalter zwischengeschaltet, der synchron mit dem ersten Schalter geschaltet wird und bei "Normalstellung" des ersten Schalters den Teiler überbrückt und bei "Aussetzstellung" des ersten Schalters das vom Target ausgelesene Signal über den Teiler leitet.

In der Zeichnung sind Ausführungsformen der Schaltungsanordnung gemäß der Erfindung wiedergegeben und werden im folgenden erläutert:
Es zeigen
Figur 1 das Prinzip einer einfachen Schaltungsanordnung
Figur 2 das Prinzip einer Schaltungsanordnung mit zusätzlichem Bildwiederholspeicher

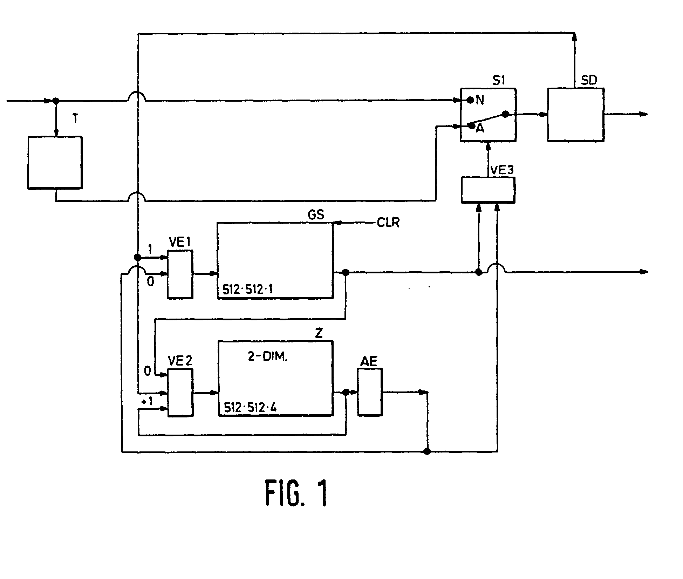

Bei der in Figur 1 dargestellten Schaltungsanordnung befindet sich der Schalter S1 in "Aussetzstellung". Diese Schalterstellung betrifft eine Phase, in der gerade das Abtasten eines Targetgebietes vorgesehen ist, für das zuvor vom Schwellenwertdetektor SD ein Signal erhalten worden war, das einer Ladungsmenge unterhalb des Schwellenwertes entspricht. In allen anderen Phasen, nämlich dann, wenn ein Targetgebiet erstmals zu Beginn der Aufnahme abgetastet wird oder wenn für ein Targetgebiet zuvor ein oberhalb der Schwelle des Schwellenwertdetektors liegendes Signal ausgelesen worden war, befindet sich der Schalter S1 in "Normalstellung". In dieser "Normalstellung" gelangt das vom Target ausgelesene Signal über den Schalter S1 zum Schwellenwertdetektor SD und von dort zu einem — in der Zeichnung nicht dargestellten Wiedergabegerät oder einem Zwischenspeicher.

Wird vom Schwellenwertdetektor SD für ein bestimmtes Targetgebiet — bei "Normalstellung" des Schalters S1 — ein Signal ermittelt, das unterhalb der Schwelle liegt, dann gibt der Schwellenwertdetektor über die Verknüpfungseinheit VE1 an den Gebietsspeicher GS (512 × 512 ×4 1 Gebietsspeicher) ein Signal, worauf dieser gesetzt wird und in diesem das gerade ermittelte Dunkelgebiet des Targets gespeichert wird. Vom Schwellenwertdetektor SD erhält außerdem der Zähler Z (512 × 512 × 4 Integrationszeitspeicher) über die Verknüpfungseinheit VE2 ein Signal, worauf der Zähler um eine Zählstufe hochgezählt wird.

Wurde in einem Abtastzyklus ein Dunkelgebiet festgestellt, dann wird im darauf folgenden Abtastzyklus beim gleichen Targetgebiet vom Gebietsspeicher ein Signal an das — in der Zeichnung nicht dargestellte — Bauelement gegeben, das für das betreffende Targetgebiet das Aussetzen des Auslesens bewerkstelligt (z.B. mittels einer Sperrspannung an einem geeigneten Gitter oder einer geeigneten Elektrode für den Abtaststrahl). Vom Gebietsspeicher GS wird außerdem — in Verbindung mit dem Zähler Z — über die Verknüpfungseinheit VE3 der Schalter S1 in die "Aussetzstellung" gesetzt.

Der Aussetzvorgang für ein Dunkelgebiet dauert eine vorbestimmte Zahl von Standardzyklen (beispielsweise 16). Hierzu wird von der Abfrageeinheit AE der Zählerstand bei jedem Zyklus überprüft. Ein Zyklus vor Erreichen der vorbestimmten Zahl der Standardzyklen wird — ausgehend von der Abfrageeinheit AE — über die Verknüpfungseinheit VE1 der Gebietsspeicher zurückgesetzt und das betreffende Dunkelgebiet gelöscht und über die Verknüpfungseinheit VE3 der Schalter S1 auf "Aussetzstellung" geschaltet. Die Zurücksetzung des Gebietsspeichers GS bewirkt dabei für den dem Aussetzvorgang folgenden Standardzyklus, daß das Abtasten nicht mehr ausgesetzt wird, sondern vielmehr die inzwischen im betreffenden Dunkelgebiet aufintegrierte Ladungsmenge ausgelesen wird. Da der Schalter S1 über die Abfrageeinheit AE durch den erst unmittelbar vor Beendigung der Auslesung zurückgesetzten Zähler Z geschaltet wird, hat dies zur Folge, daß die ausgelesene Ladungsmenge über den Teiler T (Teilungsverhältnis 1/16) und Schalter S1 ausgegeben wird. Erst danach schaltet der Schalter S1 — verzögert ! — auf "Normalstellung".

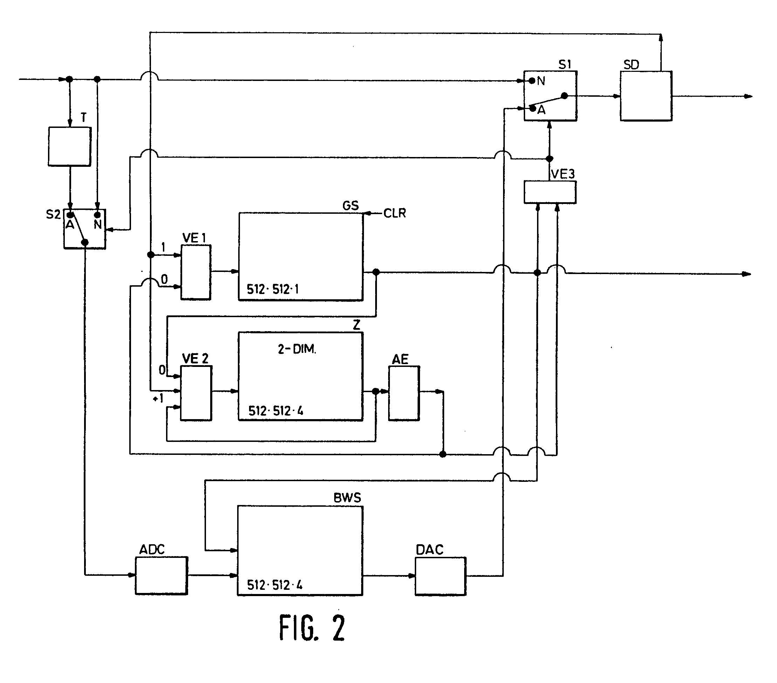

In Figur 2 ist eine Ausführungsvariante der Schaltungsanordnung mit zusätzlichem Bildwiederholspeicher BWS dargestellt. Bei dieser Schaltungsvariante werden alle vom Target ausgelesenen Signale im Bildwiederholspeicher BWS laufend gespeichert. Die oberhalb der Schwelle des Schwellenwertdetektors SD liegenden Signale werden dabei direkt über den Analog-Digital-Wandler ADC im Bildwiederholspeicher gespeichert, ohne daß das Signal über den Teiler T geleitet wurde. Hierzu ist der Schalter S2 parallel zur "Normalstellung" des Schalters S1 so geschaltet, daß er den Teiler T überbrückt. Ein nach Aufintegration der Ladungsmenge eines Dunkelgebietes entstandenes Signal wird dagegen erst nach Normierung im Teiler T im Bildwiederholspeicher BWS gespeichert. (Teiler T, ggf. mit Schalter S2, können selbstverständlich auch dem Bildwiederholspeicher nachgeschaltet sein.)

In Fällen, in denen die Ladungsmenge eines Gebietes nach einer Aussetzzeit unterhalb des Schwellenwertes liegt (in jedem Fall bei statischen aber ggf. auch bei dynamischen Objekten), wird während der darauffolgenden Aussetzzeit, in der sich der Schalter S1 ja in "Aussetzstellung" befindet, das Signal über den Digital-Analog-Wandler DAC ausgegeben. für den Fall, daß die vom vorherigen Dunkelgebiet des Targets unmittelbar nach der Aussetzzeit ausgelesene Ladung oberhalb des Schwellenwertes liegt, wird das betreffende Signal sowohl ausgegeben als auch im Bildwiederholspeicher gespeichert und damit der vorher gespeicherte, durch Aufintegration entstandene Wert gelöscht.

**Patentansprüche**

1. Schaltungsanordnung für eine Kamera zur fernsehtechnischen Aufnahme und Wiedergabe statischer oder bewegter Objekte mit standardisiertem Abtastzyklus und einem Target mit integrierender Wirkung und mit einem Steuerelement, das für die Targetgebiete einzeln in Abhängigkeit von einem Schwellenwert ein automatisch gesteuertes Aussetzen des Auslesens der elektrischen Ladungen ermöglicht, sowie mit einem Schwellenwertdetektor (SD), der dazu vorgesehen ist, die Ladungsmenge der vom Target ausgelesenen Ladungen nach Maßgabe eines vorgegebenen Schwellenwertes zu überprüfen,

außerdem mit einem dem Target zugeordneten, synchron mit der Targetauslesung mitlaufenden, zweidimensionalen Gebietsspeicher (GS),

einem zweidimensionalen synchron mit der Targetauslesung mitlaufenden, dem Gebietsspeicher zugeordneten digitalen Zähler (Z),

sowie mit einer mit dem Zähler in elektrischer Verbindung stehenden Abfrageeinheit (AE), gekennzeichnet durch

einen dem Target direkt nachgeschalteten Teiler (T),

einen dem Schwellenwertdetektor (SD) vorgeschalteten, dem Teiler (T) nachgeschalteten Schalter (S1),

wobei der Schwellenwertdetektor (SD) bei einer Ladungsmenge, die kleiner ist als der Schwellenwert und für die der Auslesevorgang ausgesetzt werden soll, bewirkt, daß an den Gebietsspeicher und den Zähler über logische Verknüpfungseinheiten (VE 1, VE 2) ein Signal gegeben wird,

wobei der Schalter (S1) für den Fall, daß kein Aussetzen des Auslesens der elektrischen Ladung erfolgt, in "Normalstellung" das vom Target ausgelesene Signal an den Schwellenwertdetektor (SD) durchläßt und für den Fall, daß der Auslesevorgang ausgesetzt wird, den Teiler (T) in "Aussetzstellung" mit dem Schwellenwertdetektor verbindet,

wobei der Gebietsspeicher (GS) durch das vom Schwellenwertdetektor (SD) ausgelöste Signal gesetzt wird und dazu dient, die den Ladungen mit einer Ladungsmenge unterhalb des Schwellenwertes zugeordneten Dunkelgebiete des Targets zu speichern, und wobei der Gebietsspeicher bei nochmaliger Abtastung der Dunkelgebiete an das den Aussetzvorga ermöglichende Bauelement ein Signal abgibt und über eine logische Verknüpfungseinheit (VE 3) den Schalter auf "Aussetzstellung" setzt,

wobei der Zähler (Z) durch das vom Schwellenwertdetektor (SD) ausgelöste Signal hochgezählt wird und dazu dient, die dem erstmaligen Speichern eines Gebietes im Gebietsspeicher (GS) folgenden Standardzyklen zu zählen,

wobei die Abfrageeinheit (AE) bewirkt, daß bei einem vorgegebenen, der Aussetzzeit entsprechenden Zählerinhalt der Gebietsspeicher (GS) zurückgesetzt und damit der Aussetzvorgang beendet, der zur Markierung des entsprechenden Dunkelgebietes im Gebietsspeicher gespeicherte Wert gelöscht, der entsprechende Inhalt des Zählers (Z) im folgenden Standardzyklus auf Null zurückgestellt und der Schalter (S1) über die Verknüpfungseinheit (VE 3) verzögert in "Aussetzstellung" gesetzt werden,

so daß die während der Ausssetzzeit im Target aufintegrierte Ladungsmenge über den Teiler (T), den Schalter (S1) und den Schwellenwertdetektor (SD) als auf den Standartzyklus normiertes Signal an das Wiedergabegerät oder den Zwischenspeicher ausgegebem wird.

2. Schaltungsanordnung nach Anspruch 1 gekennzeichnet durch

einen zwischen Teiler und Schalter geschalteten, zweidimensionalen, dem Target zugeordneten digitalen Bildwiederholspeicher (BWS) für die Aussetzzeiten,

einen dem Bildwiederholspeicher (BWS) vorgeschalteten Analog-Digital-Wandler (DAC), und einen dem Bildwiederholspeicher nachgeschalteten Digital-Analog-Wandler (DAC),

wobei das vom Schwellenwertdetektor (SD) ausgelöste Signal bewirkt, daß für den Aussetzvorgang der dem entsprechenden Dunkelgebiet entsprechende aktuelle Inhalt des Bildwiederholspeichers (BWS) über den Digital-Analog-Wandler (DAC) als normiertes Signal an das Wiedergabegerät oder einen Zwischenspeicher ausgegeben wird,

und wobei nach Beendigung jedes Aussetzvorganges die inzwischen aufintegrierte und über den Teiler ausgelesene elektrische Ladung im Analog-Digital-Wandler (ADC) umgewandelt und im Bildwiederholspeicher (BWS) in digitaler Form gespeichert wird.

3. Schaltungsanordnung nach Anspruch 2, gekennzeichnet durch

einen zweiten, zwischen dem Teiler (T) und dem Analog-Digital-Wandler (ADC) zwischengeschalteter zweiten Schalter (S2), der synchron mit dem ersten Schlater (S1) geschaltet wird, bei "Normalstellung" des ersten Schalters den Teiler überbrückt und bei "Aussetzstellung" des ersten Schalters das vom Target ausgelesene Signal über den Teiler leitet.

## Revendications

1. Montage pour un appareil de prise de vues permettant l'enregistrement et la reproduction d'objets fixes ou mobiles, au moyen de la technique de la télévision, mettant en oeuvre un cycle d'exploration normalisé et utilisant une cible ayant un effet d'intégration et un élément de commande, qui permet de réaliser, individuellement pour les zones de la cible et en fonction d'une valeur de seuil, une interruption commandée de façon automatique de la lecture des charges électriques, ainsi qu'un détecteur à valeur de seuil (SD), qui est prévu pour contrôler la quantité des charges lues à partir de la cible, en fonction d'une valeur de seuil prédéterminée, et

en outre une mémoire bidimensionnelle de zones (GS), associée à une cible et fonctionnant en synchronisme avec la lecture de la cible,

un compteur numérique (Z) fonctionnant en synchronisme avec la lecture de la cible et associé à la mémoire bidimensionnelle de zones,

ainsi qu'une unité d'interrogation (AE) reliée électriquement au compteur,

caractérisé par un diviseur (T) branché directement en aval de la cible, un commutateur (S1) branché en amont du détecteur à valeur de seuil (SD) et en aval du diviseur (T),

le détecteur à valeur de seuil (SD) agissant, dans le cas d'une quantité de charges qui est inférieure à la valeur de seuil pour laquelle l'opération de lecture doit être interompue, en sorte qu'un signal est envoyé à la mémoire de zones et au compteur par l'intermédiaire d'unités de combinaison logique (VE 1, VE 2),

le commutateur (S1) transmettant, dans la "position normale", le signal lu à partir de la cible au détecteur à valeur de seuil (SD), dans le cas où il ne se produit aucune interruption de la lecture de la charge électrique et, dans la "position d'interruption", reliant le diviseur (T) au détecteur à valeur de seuil, dans le cas où l'opération de lecture est interrompue,

la mémoire de zones (GS) étant positionnée par le signal déclenché par le détecteur à valeur de seuil (SD) et étant utilisée pour mémoriser les charges avec des zones sombres de la cible, associées à une quantité de charges inférieure à la valeur de seuil, et envoyant un signal au composant permettant l'opération d'interruption, lors d'une exploration réitérée des zones sombres et réglant le commutateur dans la position d'interruption" au moyen d'une unité de combinaison logique (VE 3),

le compteur (Z) réalisant un comptage progressif sous l'effet de l'apparition du signal déclenché par le détecteur à valeur de seuil (SD) et servant à compter les cycles standards qui succèdent à la mémorisation, réalisée pour la première fois, d'une zone dans la mémoire de zones (GS),

l'unité d'interrogation (AE) agissant en sorte que, dans le cas d'un contenu prédéterminé du compteur correspondant à la durée d'interruption, la mémoire de zones (GS) est ramenée à zéro et par conséquent l'opération d'interruption est terminée, la valeur mémorisée pour le marquage de la zone sombre correspondante dans la mémoire de zone étant effacée, le contenu correspondant du compteur (Z) étant ramené à zéro lors du cycle standard suivant et le commutateur (S1) étant positionné de façon retardée dans la "position d'interruption" par l'intermédiaire de l'unité combinatoire (VE 3),

de sorte que la quantité de charges intégrée dans la cible pendant la durée d'interruption, est envoyée à l'appareil de reproduction ou à la mémoire intermédiaire, par l'intermédiaire du diviseur (T), du commutateur (S1) et du détecteur à valeur de seuil (SD), en tant que signal normalisé sur le cycle standard.

2. Montage suivant la revendication 1, caractérisé par

une mémoire numérique bidimensionnelle de répétition d'images (BWS), branchée entre le diviseur et le commutateur et associée à la cible, pour les durées d'interruption,

un convertisseur analogique/numérique (DAC) branché en amont de la mémoire de répétition d'images (BWS),

et un convertisseur numérique/analogique (DAC) branché en aval de la mémoire de répétition d'images,

le signal déclenché par le détecteur à valeur de seuil (SD) agissant en sorte que, pour l'opération d'interruption, le contenu actuel, qui correspond à la zone sombre correspondante, de la mémoire de répétition d'images (BWS) est envoyé à l'appareil de reproduction pour une mémoire intermédiaire en tant que signal normalisé, au moyen du convertisseur numérique/analogique (DAC), et

la charge électrique intégrée entre-temps et lue par le diviseur étant convertie dans le convertisseur analogique/numérique (DAC) à la fin de chaque processus d'interruption et étant mémorisée sous forme numérique dans la mémoire de répétition d'images (BWS).

3. Montage suivant la revendication 2, caractérisé par un second commutateur (S2), qui est intercalé entre le diviseur (A) et le convertisseur analogique/numérique (ADC) et est commuté en synchronisme avec le premier commutateur (S1), shunte le diviseur lorsque le premier commutateur est dans la "position normale" et transmet le signal lu à partir de la cible au diviseur lorsque le premier commutateur est dans la "position d'interruption".

**Claims**

1. Circuit arrangement for a camera for recording and reproducing static or moving objects by television, comprising a standardised scanning cycle and a target with an integrating effect, and comprising a control element, which allows an automatically controlled cessation of the readout of the electric charges to be done individually for the target areas as a function of a threshold value, and comprising a threshold value detector (SD), which is provided for the purpose of checking the quantity of charge of the charges read out from the target in accordance with a predetermined threshold value, comprising, moreover, a two-dimensional area memory (GS), which is assigned to the target and synchronously follows the target readout, comprising a two-dimensional digital counter (Z), which synchronously follows the target readout and is assigned to the area memory, and comprising an enquiry unit (AE) electrically connected to the counter, characterized by a divider (T) directly downstream of the target, a switch (S1) upstream of the threshold value detector (SD) and downstream of the divider (T), the effect of the threshold value detector (SD) being, in the case of a quantity of charge which is smaller than the threshold value and for which the readout process is to be ceased, that a signal is transmitted to the area memory and to the counter via logic elements (VE1, VE2), the switch (S1) passing the signal read out from the target to the threshold value detector (SD) in the "normal position" in the case when there is no cessation of the readout of the electric charge, and connecting the divider (T) in the "cessation position" to the threshold value detector in the case when the readout process is ceased, the area memory (GS) being set by the signal triggered by the threshold value detector (SD) and serving to store the dark areas of the target that are assigned to the charges with a quantity of charge below the threshold value, and in the case of renewed scanning of the dark areas the area memory transmitting a signal to the component that enables the cessation process, and setting the switch to the "cessation position" via a logic element (VE 3), the counter (Z) being counted up by the signal triggered by the threshold value detector (SD), and serving to count the standard cycles following the first-time storage of an area in the area memory (GS), the effect of the enquiry unit (AE) being that, in the case of a predetermined counter content corresponding to the cessation time, the area memory (GS) is reset and the cessation process is thereby terminated, the value stored in the area memory for marking the corresponding dark area is erased, the corresponding content of the counter (Z) is reset to zero, in the following standard cycle, and the switch (S1) is set with the delay via the logic element (VE 3) into the "cessation" position, so that the quantity of charge integrated in the target during the cessation time is output as a signal standardised to the standard cycle to the reproduction set or the intermediate memory via the divider (T), the switch (S1) and the threshold value detector (SD).

2. Circuit arrangement according to Claim 1, characterized by a two-dimensional, digital refresh memory (BWS) for the cessation times, which is connected between the divider and switch and assigned to the target, an analogue-to-digital converter (DAC) upstream of the refresh memory (BWS), and a digital-to-analog converter (DAC) downstream of the refresh memory, the effect of the signal triggered by the threshold value detector (SD) being that for the cessation process, the actual content of the refresh memory (BWS) corresponding to the corresponding dark area is output as a standardised signal to the reproduction set or an intermediate memory via the digital-to-analog converter (DAC), and after termination of each cessation process, the electric charge that has meantime been integrated and read out via the divider is converted in the analog-to-digital converter (ADC) and stored in digital form in the refresh memory (BWS).

3. Circuit arrangement according to Claim 2, characterized by a second switch (S2) connected between the divider (T) and the analog-to-digital converter (ADC), which is connected synchronously to the first switch (S1), bypasses the divider in the "normal position" of the first switch and, in the "cessation position" of the first switch conducts the signal read out from the target via the divider.

FIG. 1

FIG. 2